# EUROPÄISCHE PATENTSCHRIFT

(11) **EP 0 545 035 B1**
(45) Veröffentlichungstag und Bekanntmachung des Hinweises auf die Patenterteilung: **29.11.1995**
(21) Anmeldenummer: 92117290.4
(22) Anmeldetag: 09.10.1992
(51) Int. Cl.: B60H 1/00

(54) **Befestigung der Düsenbestecke in Luftkanälen**
Mounting of ventilation outlet to air duct
Fixation de buse d'aération à conduite d'air

(30) Priorität: 29.11.1991 DE 4139315
(43) Veröffentlichungstag der Anmeldung: 09.06.1993
(73) Patentinhaber: MAN Nutzfahrzeuge Aktiengesellschaft, 80976 München (DE)
(72) Erfinder: Sager, Johann, W-8063 Odelzhausen (DE)

(56) Entgegenhaltungen:
- EP-A- 0 446 136
- DE-A- 2 040 641
- FR-A- 2 354 026
- GB-A- 2 175 459

## Beschreibung

Die Erfindung bezieht sich auf ein Düsenbesteck mit einem Düsenkörper mit außenanliegendem Flansch für den Einbau in den Luftkanal eines Omnibusses.

Es erweist sich vielfach als notwendig, auch kurzfristig, die Anzahl der Sitzreihen in den Omnibussen auf die speziellen Wünsche der Kunden hin zu variieren. Das würde bedeuten, daß man sich eine Vielzahl von Luftkanälen mit unterschiedlicher Anordnung von Aufnahmebohrungen mit Befestigungslöchern für Düsenbestecke auf Lager legen müßte.

Der Erfindung liegt die Aufgabe zugrunde, Düsenbestecke in Abhängigkeit von der Anzahl der Sitzreihen beliebig ohne vordisponierte Lagerhaltung entsprechend vorbereiteter Luftkanäle einbauen zu können.

Dies wird erfindungsgemäß dadurch erreicht, daß der Düsenkörper des Düsenbestecks in einem Ausschnitt des Luftkanals versenkbar ist und mit seinem Flansch außen auf dem Luftkanal aufliegt, daß in etwa U-förmig, sich gegenüberliegende Halterungen vorgesehen sind, deren äußere Schenkel an ihren freien Enden gekrümmt sind und deren innere Schenkel im ungespannten Zustand in etwa tangential an der Außenwand des Düsenkörpers anliegen, daß die Bodenteile der Halterungen mit Gewinde versehen sind und daß die sich gegenüberliegenden Halterungen über ein elastisches Band gehalten und unter Andruck an den Düsenkörper miteinander verspannt sind, wobei über flanschseitig des Düsenkörpergehäuses einsteckbare Schrauben die Halterungen einschraubend erreichbar und durch weiteres Anziehen in ihre Endstellungen unter Anlage ihrer Krümmungen gegen innenseitig des Luftkanals komplementär ausgebildete Nasen verspannbar sind. Solcherart ist es möglich, die Anzahl der Düsenbestecke auch noch während der jeweiligen Busmontage festzulegen, da nämlich kein Bohren und Befestigen über Blechmuttern oder dergleichen erforderlich ist. Es ist lediglich erforderlich, die Ausschnitte vor Ort auf einfache Weise in der gewünschten Anzahl auszuschneiden. Dann kann das erfindungsgemäße Düsenbesteck eingeschoben werden. Die Befestigungsschrauben werden durch die Löcher des Flansches geschoben und erfassen mit ihrem äußersten Schraubende die Halterungen. Diese werden dann durch Andrehen der Schrauben, sich selbst zentrierend, gegen die Innenwand des Luftkastens festgezogen.

Die Erfindung ist in einem Ausführungsbeispiel dargestellt und beschrieben.

Die Figuren zeigen den Einbau eines Düsenbestecks im Querschnitt und eine Einzelheit davon.

Der Luftkanal 4 weist Ausschnitte 15 auf, in denen Düsenbestecke 1 angeordnet sind. Der Düsenkörper 2 stützt sich mit seinem Flansch 3 auf der Außenseite des Luftkanals 4 ab. Innenseitig des Luftkanals sind an der Außenwand 9 des Düsenkörpers 2 U-förmige Halterungen 5, 5' angeordnet, die, sich an der Wand 9 abstützend, durch ein Band 12 gehalten werden, daß die Krümmung 7 am freien Ende des äußeren Schenkels 6 der Halterungen 5, 5' umfaßt. Der innere Schenkel 8 des bzw. der Halterungen 5, 5' liegt in etwa tangential an der Außenwand 9 des Düsenkörpers 2 an. Die Halterungen 5,5' weisen in ihrem Bodenteil 10 ein Gewinde 11 auf, das von dem äußeren Ende der in dem Flansch 3 des Düsenkörpers 2 einliegenden Schraube 13 erfaßt wird. Die Schrauben 13 werden so lange angezogen bis sich die Krümmungen 7 der Halterungen 5, 5' selbstzentrierend gegen die Nasen 14 des Luftkanals 4 anlegen und so das Düsenbesteck 1 gegen den Luftkanal 4 festziehen.

### Bezugszeichenliste

- 1: Düsenbesteck
- 2: Düsenkörper
- 3: Flansch von 2
- 4: Luftkanal
- 5,5': Halterung
- 6: äußerer Schenkel
- 7: Krümmung an 6
- 8: innerer Schenkel
- 9: Außenwand von 2
- 10: Bodenteil von 5
- 11: Gewinde in 10
- 12: elastisches Band
- 13: Schrauben
- 14: Nase an 4
- 15: Ausschnitt in 4

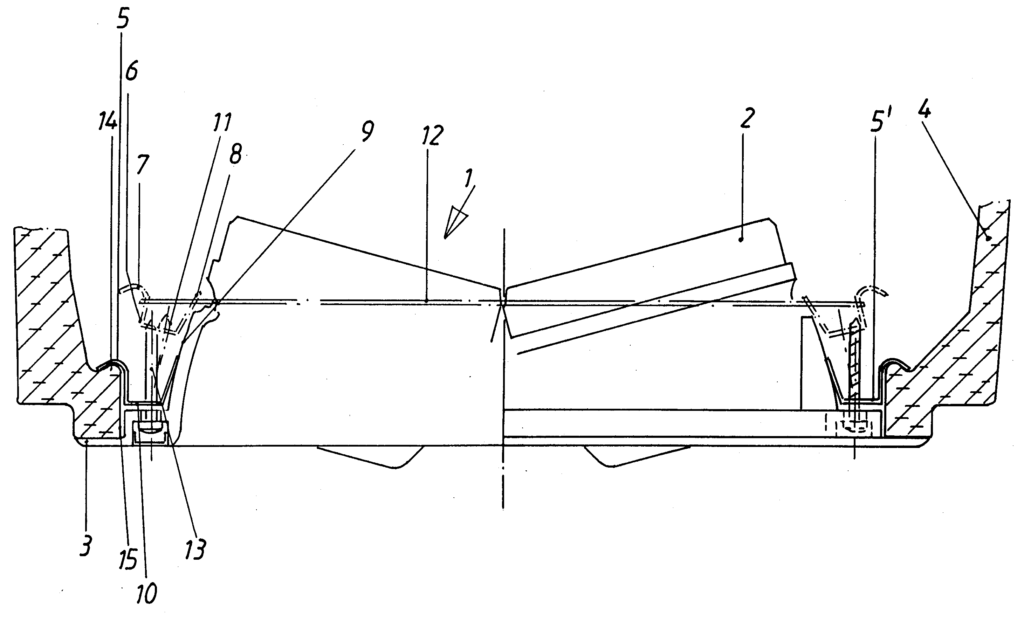

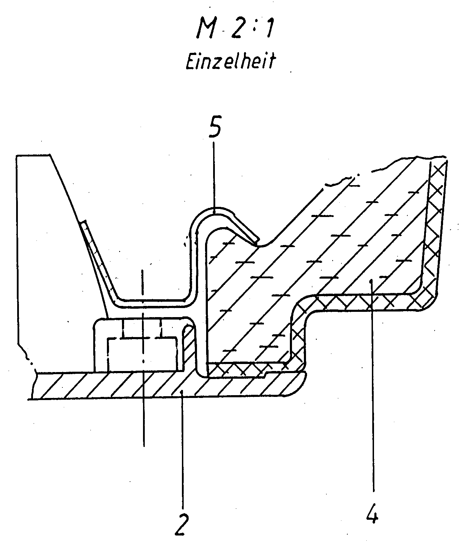

## Patentansprüche

1. Düsenbesteck (1) mit einem Düsenkörper (2) mit außenliegendem Flansch (3) für den Einbau in den Luftkanal (4) eines Omnibusses, dadurch gekennzeichnet,
- daß der Düsenkörper (2) des Düsenbestecks (1) in einem Ausschnitt (15) des Luftkanals (4) versenkbar ist und mit seinem Flansch (3) außen auf dem Luftkanal (4) aufliegt,
- daß in etwa U-förmige, sich gegenüberliegende Halterungen (5, 5') vorgesehen sind, deren äußere Schenkel (6) an ihren freien Enden gekrümmt (7) sind und deren innere Schenkel (8) im ungespannten Zustand in etwa tangential an der Außenwand (9) des Düsenkörpers (2) anliegen,
- daß die Bodenteile (10) der Halterungen (5, 5') mit Gewinde (11) versehen sind,
- und daß die sich gegenüberliegenden Halterungen (5, 5') über ein elastisches Band (12) gehalten und unter Andruck an den Düsenkörper (2) miteinander verspannt sind,
- wobei mit den flanschseitig des Düsenkörpergehäuses (2) einsteckbaren Schrauben (13) die Halterungen (5, 5') einschraubend erreichbar sind und durch weiteres Anziehen in ihre Endstellungen unter Anlage ihrer Krümmungen (7) gegen innenseitig des Luftkanals (4) komplementär ausgebildete Nasen (14) verspannbar sind.

## Claims

1. Nozzle unit (1) with a nozzle body (2) and a flange (3) on the outside for the installation in the air duct (4) in a bus/coach, characterised in that
- the nozzle body (2) of the nozzle unit (1) can be lowered in one section (15) of the air duct (4) and contacts the outside of the air duct (4) with its flange (3),
- brackets (5, 5') that are approximately U-shaped and face each other are provided whose outer sides (6) are curved (7) at their free ends and whose inner sides (8), when not under tension, contact the outer wall of the nozzle body (2) approximately tagentially,
- that the bottom parts (10) of the brackets (5, 5') are provided with threads (11),
- and that the brackets (5, 5') facing each other are kept in place by means of an elastic band (12) and, while pressed against the nozzle body (2), interlocked by tension,
- whereby the brackets (5, 5') can be reached by screwing in the bolts (13) that can be plugged in at the flange of the nozzle body housing (2), and which brackets (5, 5') can, by continuing to turn said bolts (13), be tensioned in their final positions, their curved portions (7) contacting the lugs (14) provided as complementary elements on the inside of the air duct (4).

## Revendications

1. Applique de ventilation (1) comprenant une bouche de soufflage (2) munie d'une bride (3), d'appui externe, pour le montage dans une gaine de ventilation d'un autobus, caractérisé en ce que :
- la bouche (2) de l'applique (1) peut être engagée dans une ouverture (15) de la gaine de ventilation (4), avec appui sur l'extérieur de celle-ci par la bride (3),
- des organes de fixation (5, 5') sensiblement en forme de U et situés face à face, ont leur branches externes (6) recourbées à leurs extrémités (7), tandis que leurs branches internes (8), en l'absence de tension, reposent sensiblement tangentiellement sur la paroi externe (9) de la bouche de soufflage (2),
- les fonds (10) des organes de fixation (5, 5') sont percés chacun d'un trou fileté (11),
- les organes de fixation (5, 5') disposés face à face sont reliés par une bande élastique (12) qui les applique sous pression contre la bouche de soufflage (2),
- des vis (13) introduites, du côté de la bride, à travers le boîtier de la bouche de soufflage (2), peuvent atteindre les organes de fixation (5, 5') pour s'y visser et les amener ainsi dans leurs positions finales, où ils sont sous tension, leurs extrémités recourbées (7) reposant sur des parties complémentaires (14), en relief, situées sur la face interne de la gaine de ventilateur (4).
